# EUROPÄISCHE PATENTANMELDUNG

(11) **EP 4 383 097 A1**
(43) Veröffentlichungstag der Anmeldung: **12.06.2024**
(21) Anmeldenummer: 22212185.7
(22) Anmeldetag: 08.12.2022
(51) Int. Cl.: G06F 17/18, G06N 3/00, B61L 27/00

(54) **VALIDIERUNG EINER SIMULIERTEN BINÄRZEITREIHE**

(71) Anmelder: Siemens Mobility GmbH, 81739 München (DE)
(72) Erfinder: Griebel, Stephan, 38302 Wolfenbüttel (DE); Kinas, Marco, 31275 Lehrte (DE)
(74) Vertreter: Siemens Patent Attorneys

(57) **Zusammenfassung**

Es wird ein computer-implementiertes Verfahren zum Bewerten eines simulierten Datensatzes beschrieben, das Verfahren aufweisend:
i) Simulieren eines Datensatzes, welcher eine simulierte Binärzeitreihe, insbesondere eines Achszählers, aufweist;
ii) Bereitstellen zumindest eines korrespondierenden gemessenen Datensatzes, welcher mindestens eine gemessene Binärzeitreihe aufweist, und eines Bezugsdatensatzes, welcher mit dem gemessenen Datensatz assoziiert ist;
iii) Bestimmen eines Akzeptanzkriteriums bezüglich des simulierten Datensatzes basierend auf dem Bezugsdatensatz;
iv) Bestimmen einer Abweichung zwischen dem simulierten Datensatz und dem gemessenen Datensatz und/oder einem mit dem gemessenen Datensatz assoziierten Datensatz; und
v) Feststellen, ob die Abweichung das Akzeptanzkriterium erfüllt.

## Beschreibung

### Technisches Gebiet

Die Erfindung bezieht sich auf ein Computer-implementiertes Verfahren zum Bewerten eines simulierten Datensatzes, welcher eine Binärzeitreihe aufweist, insbesondere eine Binärzeitreihe aus dem Bereich der Schienenfahrzeuge, z.B. eine Binärzeitreihe eines Achszählers. Weiterhin bezieht sich die Erfindung auf ein Verfahren zum Bereitstellen von validierten Trainingsdaten, insbesondere für einen künstliche Intelligenz (KI) Algorithmus. Ferner bezieht sich die Erfindung auf eine Vorrichtung zur Datenverarbeitung und ein Computerprogrammprodukt.

Die Erfindung kann sich somit auf das technische Gebiet der Bewertung von (simulierten) Datensätzen beziehen, insbesondere im Hinblick auf Schienenfahrzeuge.

### Technischer Hintergrund

Der Begriff "Binärzeitreihe" kann einen Datensatz bezeichnen, in welchem Binärdaten (z.B. 1 und 0 bzw. "Signal" und "kein Signal") entlang einer Zeitperiode aufgezeichnet sind. Ein praktisches Beispiel hierfür kann ein Achszähler (binäre Achszählungsdaten) sein, welcher im Bereich der Schienenfahrzeuge weit verbreitet ist. Achszähler sind insbesondere elektronische Bauteile zum Zählen der Radsätze vorbeifahrender Schienenfahrzeuge und können z.B. der Gleisfreimeldung dienen. Mittels Sensorik (z.B. Zählpunkt, Radsensor) können in einen Gleisabschnitt einfahrende Achsen gezählt und mit ausfahrenden Achsen verglichen werden. Jede vorbeifahrende Achse kann hierbei ein Signal der Binärzeitreihe darstellen.

Für unterschiedliche Anwendungen kann es zweckdienlich sein, neben gemessenen Binärzeitreihen (insbesondere der Achszähler) auch simulierte Binärzeitreihen einzusetzen. Hierbei stellt sich allerdings die Frage, ob die simulierten Binärzeitreihen die realen, gemessenen Binärzeitreihen zuverlässig abbilden, bzw. die Realität ausreichend genau abbilden.

Insbesondere im Bereich der Schienenfahrzeuge werden aber besonders hohe Anforderungen an Sicherheit und Zuverlässigkeit gestellt. Entsprechend können in zahlreichen Anwendungsfällen simulierte Daten überhaupt nur dann eingesetzt werden, wenn eine positive Bewertung der Zuverlässigkeit dieser simulierten Daten nachgewiesen wurde, bzw. die Daten gewissen Normen entsprechen.

Derzeit scheint allerdings kein zuverlässiges Bewertungsverfahren für simulierte Binärzeitreihen, insbesondere nicht im Bereich der Schienenfahrzeuge, bekannt zu sein.

### Zusammenfassung der Erfindung

Es könnte ein Bedarf bestehen, eine simulierte Binärzeitreihe (insbesondere eines Achszählers) zuverlässig zu bewerten (insbesondere bezüglich der Genauigkeit der Abbildung der Realität).

Ein Verfahren zum Bewerten, ein Verfahren zum Bereitstellen von Trainingsdaten, eine Vorrichtung zur Datenverarbeitung, und ein Computerprogrammprodukt werden im Folgenden beschrieben.

Gemäß einem ersten Aspekt der Erfindung wird ein, insbesondere Computer-implementiertes, Verfahren zum Bewerten (Validieren) eines simulierten (modellierten) Datensatzes beschrieben, das Verfahren aufweisend:
i) Simulieren eines Datensatzes, welcher eine simulierte Binärzeitreihe, insbesondere eines Achszählers, aufweist;
ii) Bereitstellen zumindest eines korrespondierenden gemessenen (realen) Datensatzes, welcher mindestens eine gemessene Binärzeitreihe aufweist, und eines Bezugsdatensatzes, welcher mit dem gemessenen Datensatz assoziiert ist (z.B. basierend auf dem gemessenen Datensatz erzeugt);
iii) Bestimmen eines Akzeptanzkriteriums (eines Qualitätskriterium) bezüglich des simulierten Datensatzes basierend auf dem Bezugsdatensatz;
iv) Bestimmen einer Abweichung (bzw. Differenz, wobei der Begriff "Differenz" hier nicht streng mathematisch, sondern im Sinne einer Abweichung zu verstehen ist) zwischen dem simulierten Datensatz und dem gemessenen Datensatz und/oder einem mit dem gemessenen Datensatz assoziierten Datensatz; und v) Feststellen, ob die Abweichung das Akzeptanzkriterium erfüllt (wodurch eine positive oder negative Bewertung erhalten wird).

Gemäß einem zweiten Aspekt der Erfindung wird ein, insbesondere Computer-implementiertes, Verfahren zum Bereitstellen von Trainingsdaten beschrieben, das Verfahren aufweisend:
i) Bewerten eines simulierten Datensatzes wie oben beschrieben; und
ii) Verwenden der simulierten Daten, welche das Akzeptanzkriterium (deren Abweichung von den gemessenen Daten gering genug ist) erfüllen, als Trainingsdaten (insbesondere für einen KI Algorithmus).

Gemäß einem dritten Aspekt der Erfindung wird eine Vorrichtung zur Datenverarbeitung beschrieben, welche zumindest einen Prozessor aufweist, und welche eingerichtet ist zumindest eines der oben beschriebenen Verfahren auszuführen.

Gemäß einem vierten Aspekt der Erfindung wird ein Computerprogrammprodukt beschrieben, welches Befehle aufweist, die bei der Ausführung des Programms durch einen Computer diesen veranlassen, zumindest eines der oben beschriebenen Verfahren auszuführen.

Gemäß einem exemplarischen Ausführungsbeispiel kann die Erfindung auf der Idee basieren, dass eine simulierte Binärzeitreihe (insbesondere eines Achszählers) zuverlässig bewertet werden kann, wenn basierend auf einem mit gemessenen Daten assoziierten Bezugsdatensatz ein Akzeptanzkriterium bestimmt wird und festgestellt wird, ob die Abweichung zwischen einem simulierten Datensatz und einem gemessenen Datensatz das Akzeptanzkriterium erfüllt.

Die Erfinder haben erkannt, dass auch gemessene Datensätze eine Abweichung unter gleichen Bedingungen aufweisen, und, dass ein akzeptabler simulierter Datensatz von den gemessenen Datensätzen nicht zu unterscheiden sein sollte, um ein möglichst effizientes und sicheres Bewertungskriterium bereitzustellen. Von Interesse ist hierbei insbesondere die tatsächliche (unbekannte) Verteilung der Abweichung zwischen gleichartigen gemessenen Datensätzen. Ist diese Verteilung bekannt, so kann mittels Statistik ein robustes Akzeptanzkriterium definiert werden. In anderen Worten soll eine Approximation der unbekannten Verteilung erfolgen, so dass ein Konfidenzintervall als Akzeptanzkriteriums definiert werden kann.

Liegt nun der Aufwand, der beim Übereinanderschieben einer simulierten und einer realen Binärzeitreihe entsteht, innerhalb des vorher ermittelten Akzeptanzkriteriums, so kann die Simulation als akzeptabel nah an der Realität angesehen werden. Das Maß (der Transformation) und das Akzeptanzkriterium können somit in der praktischen Anwendung eine Validierung der Simulationsdaten ermöglichen.

### Exemplarische Ausführungsbeispiele

Gemäß einem Ausführungsbeispiel weist das Bestimmen der Abweichung auf: Transformieren (bzw. Übertragen) des simulierten Datensatzes zu dem (auf den) gemessenen Datensatz oder umgekehrt. Dies kann den Vorteil haben, dass diese Datensätze (mit einer geeigneten Distanzmetrik) effizient verglichen werden können, so dass eine Information erhalten wird, die dafür indikativ ist, wie weit die Datensätze voneinander abweichen.

In einem Beispiel werden zur Ermittlung des Maßes für die Verschiedenheit zweier binärer Zeitreihen mathematische Verfahren in die konkrete Anwendung neuartig übertragen, so dass die "Kosten" bzw. der "Aufwand" eines "Übereinanderschiebens" (Transformierens) der beiden Zeitreihen ermittelt werden kann.

Gemäß einem weiteren Ausführungsbeispiel weist das Transformieren das Verwenden einer Wahrscheinlichkeitsdichtefunktion (bzw. Wahrscheinlichkeitsdichteverteilung) auf. Dies ermöglicht die direkte Anwendung standardisierter und erprobter Methoden, welche zur Effizienz und Zuverlässigkeit des beschriebenen Verfahrens beitragen.

Gemäß einem weiteren Ausführungsbeispiel weist das Transformieren einen Optimal Transport Theory (OTT) Algorithmus, insbesondere Earth Mover's Distance (EMD)-Algorithmus, auf. Hierbei handelt es sich um ein etabliertes Verfahren, das eine Wahrscheinlichkeitsdichtefunktion verwendet.

Unter der "Optimal Transport Theory" wird in dem Kontext dieses Dokuments insbesondere ein klassisches mathematisches Problem verstanden, bei welchem eine gegebene Anfangsverteilung in eine gewünschte Zielverteilung transformiert wird. Der optimale Transport ist dabei diejenige Transformation, welche eine definierte Kostenfunktion (geringster Aufwand) minimiert. In der Literatur wird häufig die Analogie eines Sandhaufens (Quellverteilung) und einer Grube (Zielverteilung) verwendet, wobei der Sand unter Aufbringung einer möglichst geringen mechanischen Arbeit (Gewichtskraft mal Transportstrecke) vom Haufen in die Grube befördert werden soll.

Es existieren verschiedene Algorithmen zur Lösung des OT-Problems (z.B. Earth Mover's Distance, Sinkhorn-Algorithmus zur Lösung des Entropie-regularisierten OT-Problems). Für den hier vorliegenden Anwendungsfall wird in einem Beispiel auf die exakte Lösung auf Basis des EMD-Algorithmus zurückgegriffen, da durch die Eindimensionalität der Zeitreihen eine akzeptable Rechenzeit erwartet wird. Somit sind bei der Lösung keine Hyper-Parameter einzustellen.

EMD löst das Optimal Transport Problem in einem Beispiel exakt (also approximiert es nicht nur). Dies kann im hochdimensionalen Fall eventuell rechenintensiv werden.

Gemäß einem weiteren Ausführungsbeispiel weist das Transformieren einen Dynamic Time Warping (DTW) Algorithmus, insbesondere einen penalized-DTW Algorithmus, auf.

"DTW" kann im Kontext dieses Dokument insbesondere einen Algorithmus bezeichnen, welcher eine optimale Angleichung zweier Zeitreihen ermöglicht, sodass die übereinstimmenden Bereiche der beiden Zeitreihen gefunden und aufeinander transformiert werden können. Auf Basis dieser Angleichung kann die Ähnlichkeit dieser Zeitreihen auf folgende Art und Weise quantifiziert werden (ebenfalls oft als Kosten bezeichnet): In der Standardversion von DTW ergibt sich die Kostenfunktion (der Aufwand) allein durch die Differenz der Funktionswerte von aufeinander projizierten Wertepaaren zwischen der Real- und Simulationszeitreihe. Bei Binärzeitreihen (wie diese in unserem konkreten Anwendungsfall gegeben sind) entstehen also Kosten bei den Abbildungen der Funktionswerte (0 → 1) und (1 → 0), wohingegen die Abbildungen der Funktionswerte (0 → 0) und (1 → 1) kostenfrei bleiben.

Für den hier vorliegenden Anwendungsfall kann dies die Problematik ergeben, dass Binärzeitreihen mit gleicher Anzahl an positiven und negativen Flanken stets kostenfrei aufeinander abgebildet werden können - unabhängig davon, ob die Signale ansonsten verzerrt (lokal gestreckt oder gestaucht) werden. Anschaulich argumentiert beeinflusst also nur die Fragestellung die Kosten, ob sich die Anzahl der detektierten Achsen in beiden Zeitreihen unterscheidet. Unterschiedliche Geschwindigkeiten, Beschleunigungen, Raddurchmesser, Waggonlängen, Kupplungslängen etc. der Real- und Simulationszeitreihe hätten daher keinen Einfluss auf die Kosten. Diese Eigenschaft könnte die Anwendbarkeit der Methode in einem Beispiel einschränken.

Aus diesem Grund wird in einem bevorzugten Beispiel das sogenannte Penalized-DTW verwendet. Diese Methode ist eine Erweiterung von DTW, welche zusätzliche Kosten bei einer Kontraktion und Expansion der transformierten Zeitreihe einführt. Der entsprechende Penalty-Parameter bestimmt den Einfluss der Bestrafung von Kontraktion sowie Expansion auf die Gesamtkosten und muss für den vorliegenden Anwendungsfall stets größer Null gewählt werden. Zu große Werte für den Penalty-Parameter beeinflussen die Optimierung negativ. Als geeigneter Default-Wert hat sich in einem exemplarischen Beispiel p_penalty = 0,1 herausgestellt.

Gemäß einem weiteren Ausführungsbeispiel weist das Bereitstellen des Bezugsdatensatzes auf: Bereitstellen von zwei oder mehr gemessenen Datensätzen. Dies kann den Vorteil haben, dass ohne zusätzlichen Aufwand der Bezugsdatensatz direkt basierend auf gemessenen Datensätzen erstellt werden kann. Die gemessenen Datensätze können zudem eine besondere Zuverlässigkeit aufweisen, da es sich (ausschließlich) um reale Daten handelt.

Sofern ausreichend reale Zeitreihen vorhanden sind, welche bei gleichen Bedingungen (Geschwindigkeiten, Beschleunigungen, Konfiguration des Zuges) aufgezeichnet wurden, können diese Realzeitreihen direkt als Bezugsdatensatz verwendet werden. Eine zusätzliche Datensatzerweiterung ist somit in diesem Fall nicht notwendig.

Gemäß einem weiteren Ausführungsbeispiel weist das Bereitstellen des Bezugsdatensatzes auf: künstliches Erweitern des gemessenen Datensatzes. Dies insbesondere mittels Beaufschlagens des gemessenen Datensatzes mit einer (insbesondere zufälligen) Störung, z.B. durch ein (zufälliges) Rauschen und/oder einen zufälligen Messfehler. In einem Beispiel kann auch ein Rauschen in den Randbedingungen verursacht werden, z.B. Fahrzeugparameter, Kupplungsspiel, variable Raddurchmesser, Verschleiß, etc. Dies kann den Vorteil haben, dass der Bezugsdatensatz mit geringem Aufwand durch Variationen der gemessenen Daten erzeugt werden kann.

Ist nur eine einzige (oder zumindest relativ wenige) reale Zeitreihe für die spezifischen Bedingungen verfügbar, kann die Datenbasis künstlich erweitert werden. Dazu können zunächst geeignete Annahmen bezüglich einer erwartbaren Verteilung des unbekannten Rauschens getroffen werden. Sofern Achszähler zur Aufzeichnung des Signals (mit räumlichem Versatz) verwendet werden, können die beiden generierten Zeitreihen zur weiteren Charakterisierung des Sensorrauschens herangezogen werden. Auf Basis der getroffenen Rauschannahmen können (n-1) zufällig generierte Rauschinstanzen erzeugt werden, welche mit der originalen Realzeitreihe überlagert werden. Daraus resultiert dann z.B. ein künstlich erzeugter Bezugsdatensatz (der Kardinalität n), der die Grundlage für die weiteren Schritte bilden kann.

Unter "Rauschen" kann in diesem Zusammenhang die Gegebenheit angesehen werden, dass bei verschiedenen Messungen unter gleichen Bedingungen dennoch voneinander abweichende Zeitreihen entstehen. Fährt ein Zug beispielsweise bei gleicher konstanter Geschwindigkeit mehrmals über den Achszählsensor, so werden stets nicht-identische Binärzeitreihen entstehen. Diese Abweichungen sind beispielsweise auf Messrauschen zurückzuführen.

Gemäß einem weiteren Ausführungsbeispiel wird der Bezugsdatensatz erstellt durch eine Kombination von gemessenen Datensätzen und künstlich erweiterten Datensätzen.

Gemäß einem weiteren Ausführungsbeispiel weist das Bereitstellen des Akzeptanzkriteriums auf: Bereitstellen von, insbesondere zufälligen, Teilmengen des Bezugsdatensatzes und Bestimmen eines Konfidenzintervalls basierend auf den Teilmengen.

Gemäß einem weiteren Ausführungsbeispiel weist das Bestimmen des Konfidenzintervalls das Verwenden eines statistischen Algorithmus, insbesondere eines Bootstrapping Algorithmus, auf.Hiermit kann ein nichtparametrischer Ansatz realisiert werden, also keine Annahmen bzgl. der Form der zugrundeliegenden Verteilung. Die Modellstruktur wird lediglich aus den Daten gebildet.

Mit Hilfe des sog. "Bootstrapping Verfahrens" kann eine Verteilung der Kosten ermittelt werden, die es ermöglicht festzulegen, ob eine weitere Datenreihe, z.B. eine simulierte, signifikant (zu einem gegebenen Vertrauensintervall) abweicht und somit nicht-akzeptabel wäre.

In einem exemplarischen Ausführungsbeispiel werden k zufällige Teilmengen (Batches), jeweils bestehend aus einer gewissen Anzahl an Zeitreihen, aus dem Bezugsdatensatz erzeugt/zufällig ausgewählt. Für jedes dieser Batches wird eine Transformationskostenmatrix Ci(auf Basis der festgelegten Distanzmetrik, z.B. OTT oder DWT) zwischen allen in diesem Batch enthaltenen Zeitreihen ermittelt. Anschließend erfolgt für jedes Batch eine Mittelwertbildung (Cm von Ci) der Transformationskosten.

Auf Basis dieser Mittelwerte wird in einem Beispiel über die Histogramm-Methode eine Wahrscheinlichkeitsdichtefunktion (PDF) der Kosten zwischen den Zeitreihen approximiert. Über diese PDF kann das gesuchte Konfidenzintervall bestimmt werden. In einem Beispiel wird die Kostenverteilung (PDF) p(c) über eine Bootstrap-Verteilung approximiert. Dann wird ein Konfidenzintervall bestimmt, z.B. 95 %. Das Akzeptanzkriterium fordert nun, dass die Kosten zwischen Real- und Simulationsdaten im ermittelten Konfidenzintervall liegen müssen. Beispielsweise kann der (Mittel-)Wert der Kosten im ermittelten Konfidenzintervall liegen.

Im Folgenden werden zwei Ausführungsbeispiele bezüglich des Vergleichs von simulierten und gemessenen Daten und der anschließenden Bewertung beschrieben:
Beispiel 1: wenn mehrere gleichwertige Realzeitreihen (gemessener Datensatz) vorhanden sind, können die Kosten zwischen der Simulationszeitreihe und jeder Realzeitreihe bestimmt werden. Der anschließend bestimmte Mittelwert dient als Vergleichswert der Kosten c_v.
Beispiel 2: wenn nur eine (oder wenige) originale Realzeitreihe existiert (während die weiteren Zeitreihen durch Manipulation aus dieser Originalzeitreihe hervorgehen), werden z.B. nur die Kosten zwischen der simulierten Zeitreihe und der originalen Realzeitreihe berechnet. Diese Kosten werden direkt als Vergleichswert der Kosten c_v verwendet.

Liegt der Vergleichswert der Kosten c_v im oben festgelegten Konfidenzintervall, werden die Simulationsergebnisse als "nah" genug an der realen Verteilung angesehen. Somit ist das Akzeptanzkriterium der Simulationsdaten erfüllt. Liegt der Vergleichswert außerhalb des Konfidenzintervalls, werden die Simulationsdaten als nicht akzeptabel angesehen.

Gemäß einem weiteren Ausführungsbeispiel weist die Binärzeitreihe eine Mehrzahl von Peaks (Signalen) auf. Das Bestimmen der Abweichung und/oder des Akzeptanzkriteriums kann dann zumindest einen der folgenden Parameter berücksichtigen: Peak-Zeitverteilung, Peak-Breite, Peak-Steigung. Dies kann den Vorteil haben, dass neben der reinen Zeitreihe auch weitere Parameter der Signale in Betracht gezogen werden können, und damit die Aussagekraft erhöht werden.

Gemäß einem weiteren Ausführungsbeispiel wird das Verfahren im Zusammenhang mit Schienen-gebundenen Fahrzeugen eingesetzt. Oben wurde bereits detailliert die Achszähler Anwendung diskutiert. Ferner hat der Bereich der Schienenfahrzeuge besonders hohe Anforderungen an Sicherheit und Zuverlässigkeit und entsprechende Normen. Daher kann der Einsatz des beschriebenen Bewertungsverfahrens von Binärzeitreihen in diesem Zusammenhang besonders wichtig und vorteilhaft sein.

Gemäß einem weiteren Ausführungsbeispiel werden die simulierten Daten, welche das Akzeptanzkriterium erfüllen, als Trainingsdaten verwendet. Insbesondere im Bereich der Schienenfahrzeuge können die Anforderungen an simulierte Daten besonders hoch sein. Gleichzeitig kann aber ein erhöhter Bedarf an solchen Daten bestehen, da oftmals gemessene Daten als Trainingsdaten nicht im ausreichenden Umfang vorhanden sind. Gerade diese Trainingsdaten können aber wiederum von besonderer Wichtigkeit sein, um eine akzeptable Zuverlässigkeit des zu trainierenden Algorithmus, insbesondere eines KI Algorithmus, zu ermöglichen.

Gemäß einem weiteren Ausführungsbeispiel werden die Trainingsdaten an einen künstliche Intelligenz (KI) Algorithmus bereitgestellt. Das Erfüllen des Akzeptanzkriteriums kann hierbei eine notwendige Zulassungsvoraussetzung für den Einsatz der simulierten Daten an/in dem KI Algorithmus sein.

Im Kontext dieses Dokuments kann der Begriff "KI" sich insbesondere auf Computer-basierte Ansätze zur Nachahmung kognitiver Funktionen eines menschlichen Geistes beziehen, insbesondere Lernen und Problemlösung. Es wurde eine Vielzahl verschiedener mathematischer Algorithmen und Berechnungsmodelle entwickelt, um KI-Funktionalitäten zu implementieren, beispielsweise "maschinelles Lernen", "deep learning", neuronale Netzwerke, genetische Algorithmen, Kernel Regression, etc. Der Hauptzweck dieser Ansätze kann darin gesehen werden, einen vorhandenen Algorithmus zu verbessern, indem er mit Trainingsdaten trainiert wird, so dass ein Lerneffekt auftritt und sich die Problemlösungsfähigkeit des Algorithmus im Laufe der Zeit verbessert. Dies kann mit oder ohne menschliches Eingreifen (z.B. Verbessern) geschehen.

Wenn gezeigt werden kann, dass die simulierten Daten hinreichend "realistisch" sind, dann können Trainingsdaten für den KI-Algorithmus in ausreichender Anzahl künstlich erzeugt werden, vorteilhafterweise ohne aufwändige Tests in der Realität.

In einem exemplarischen Ausführungsbeispiel können Aspekte der vorliegenden Erfindung auch wie folgt beschrieben werden:
1. Bestimmung der Ähnlichkeit zwischen zwei binären Zeitreihen über die Transformation einer Quell-Zeitreihe auf eine Ziel-Zeitreihe und darauf basierend einer Kostenmetrik zur Ermittlung des entsprechenden Aufwands. Durch diesen Vergleich kann schlussendlich auf die Güte der Simulation im Vergleich mit der Wirklichkeit geschlossen werden. Im Vergleich zu konventionellen Metriken (z.B. L2-Norm) kann durch diesen Ansatz unter anderem eine signifikant erhöhte Robustheit und/oder gleichmäßige Kostenerhöhung bei auseinanderdriftenden Zeitreihen erhalten werden.
2. Übertragen der Optimal Transport Theory (OTT) vom Bereich der Wahrscheinlichkeitsdichtefunktionen auf die hier vorliegenden binären Achszählsensor-Zeitreihen. Dies ermöglicht die Nutzung der bereits existierenden mathematischen Theorie.
3. Herleitung eines quantitativen und verlässlichen Akzeptanzkriteriums auf Basis eines Konfidenzintervalls. Durch diese Objektivierung kann es ermöglicht sein, in fachliche Diskussionen mit Gutachtern zu treten und den Dialog mit den normativen Vorgaben zu beginnen.
4. Bestimmung des Konfidenzintervalls als Akzeptanzkriterium (z. B. über das Bootstrapping-Verfahren). Hierdurch kann es möglich sein festzulegen, ob eine weitere Datenreihe - z.B. eine simulierte - signifikant (zu einem gegebenen Vertrauensintervall) abweicht und somit nicht-akzeptabel wäre.

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt.

Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

### Kurze Beschreibung der Zeichnungen

Figur 1 zeigt schematisch ein computer-implementiertes Verfahren zum Bewerten eines simulierten Datensatzes gemäß einem exemplarischen Ausführungsbeispiel der Erfindung.
Figur 2 zeigt ein Bestimmen einer Abweichung (Transformieren) zwischen einem simulierten Datensatz und einem gemessenen Datensatz gemäß einem exemplarischen Ausführungsbeispiel der Erfindung.
Figur 3 zeigt ein eine Transformation mittels OTT gemäß einem exemplarischen Ausführungsbeispiel der Erfindung.
Figur 4 zeigt ein Ermitteln eines Akzeptanzkriteriums gemäß einem exemplarischen Ausführungsbeispiel der Erfindung.
Figur 5 zeigt einen gemessenen Datensatz gemäß einem exemplarischen Ausführungsbeispiel der Erfindung.
Figur 6 zeigt ein Bewerten des simulierten Datensatzes anhand des Akzeptanzkriteriums gemäß einem exemplarischen Ausführungsbeispiel der Erfindung.

### Detaillierte Beschreibung der Zeichnungen

Die Darstellung in den Zeichnungen ist schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

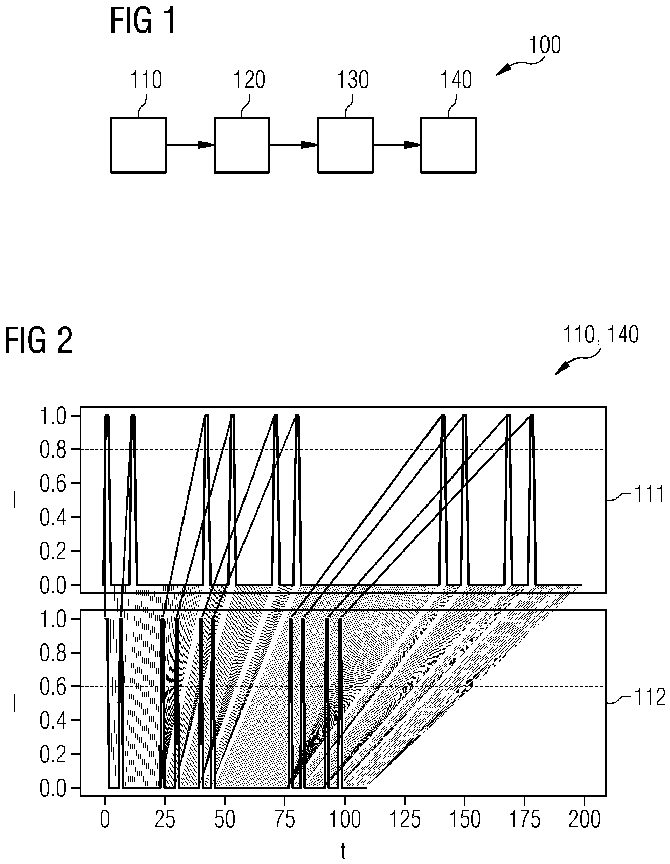

**Figur 1** zeigt eine schematische Übersicht eines Verfahrens 100 zum Bewerten eines simulierten Datensatzes gemäß einem exemplarischen Ausführungsbeispiel der Erfindung.

In einem ersten Schritt 110 wird ein Datensatz, welcher eine Binärzeitreihe, insbesondere eines Achszählers, aufweist, simuliert. Dann wird eine Distanzmetrik ausgewählt, mittels welcher der simulierte Datensatz 111 auf einen realen Datensatz übertragen, bzw. transformiert, werden kann. In bevorzugten Ausführungsbeispielen können hier Algorithmen von etablierten und erprobten Verfahren wie Optimal Transport Theory (OTT) oder Dynamic Time Warping (DTW) eingesetzt werden. Insbesondere soll festgestellt werden, wie groß der Aufwand bzw. die Kosten sind, um eine simulierte Binärzeitreihe auf eine gemessene/reale Binärzeitreihe zu übertragen (oder umgekehrt).

In einem zweiten Schritt 120 wird ein korrespondierender gemessener Datensatz 112 bereitgestellt und ein Bezugsdatensatz wird erstellt, welcher zumindest teilweise mit dem gemessenen Datensatz assoziiert ist, bzw. auf diesem basiert. In einem ersten Beispiel sind eine Vielzahl von gemessenen Binärzeitreihen vorhanden, so dass diese Vielzahl bereits den Bezugsdatensatz stellen kann. In einem weiteren Beispiel werden eine Vielzahl von assoziierten Binärzeitreihen basierend auf dem gemessenen Datensatz künstlich erzeugt. Dies kann z.B. dadurch geschehen, dass der gemessene Datensatz mit einem zufälligen Rauschen beaufschlagt wird. In diesem Zusammenhang sind die assoziierten (künstlichen) Binärzeitreihen nicht als simulierte Binärzeitreihen anzusehen. Auf Basis von realen Zeitreihen wird somit ermittelt, welches "natürliche Rauschen" bei der Ermittlung von realen Zeitreihen entsteht, so z.B. bei der Generierung von binären Zeitreihen bei der Achszählung.

In einem dritten Schritt 130 wird ein Akzeptanzkriterium bezüglich des simulierten Datensatzes basierend auf dem Bezugsdatensatz bestimmt. In einem bevorzugten Beispiel wird eine statistische Bewertung des Bezugsdatensatzes durchgeführt, z.B. mittels des etablierten und erprobten Bootstrapping Algorithmus. Dadurch kann eine Wahrscheinlichkeitsdichtefunktion berechnet werden, von welcher dann ein Konfidenzintervall bestimmbar ist. Liegt nun ein simulierter Datensatz innerhalb dieses Konfidenzintervalls, so kann davon ausgegangen werden, dass er das Akzeptanzkriterium erfüllt.

Im letzten Schritt 140 findet die eigentliche Bewertung des simulierten Datensatzes statt. Es wird eine Abweichung (bzw. eine Differenz) zwischen dem simulierten Datensatz 111 und dem gemessenen Datensatz 112 und/oder einem mit dem gemessenen Datensatz assoziierten Datensatz (also z.B. erzeugt durch zufälliges Rauschen) bestimmt (z.B. mittels OTT oder DWT). Dann wird festgestellt, ob die Abweichung zwischen den Datensätzen das Akzeptanzkriterium erfüllt, bzw. innerhalb des in Schritt 130 bestimmten Konfidenzintervalls liegt.

**Figur 2** zeigt eine Transformation (entspricht Schritt 110 (Auswahl der Distanzmetrik) und Schritt 140 (Bestimmen der Abweichung)) zwischen einem simulierten Datensatz 111 und einem gemessenen Datensatz 112 gemäß einem exemplarischen Ausführungsbeispiel der Erfindung. Beide Datensätze weisen eine Binärzeitreihe auf, bei welcher Signale (peaks) entlang einer Zeitperiode aufgenommen werden. Um die Datensätze zu überlagern ist eine Transformation notwendig, welche z.B. mittels der oben beschrieben Verfahren durchgeführt werden kann. Im gezeigten, anschaulichen Beispiel liegen die simulierten und realen Daten relativ weit auseinander, so dass ein erhöhter "Kostenaufwand" für die Transformation notwendig ist. In diesem Fall könnte es sein, dass der simulierte Datensatz das Akzeptanzkriterium nicht erfüllt.

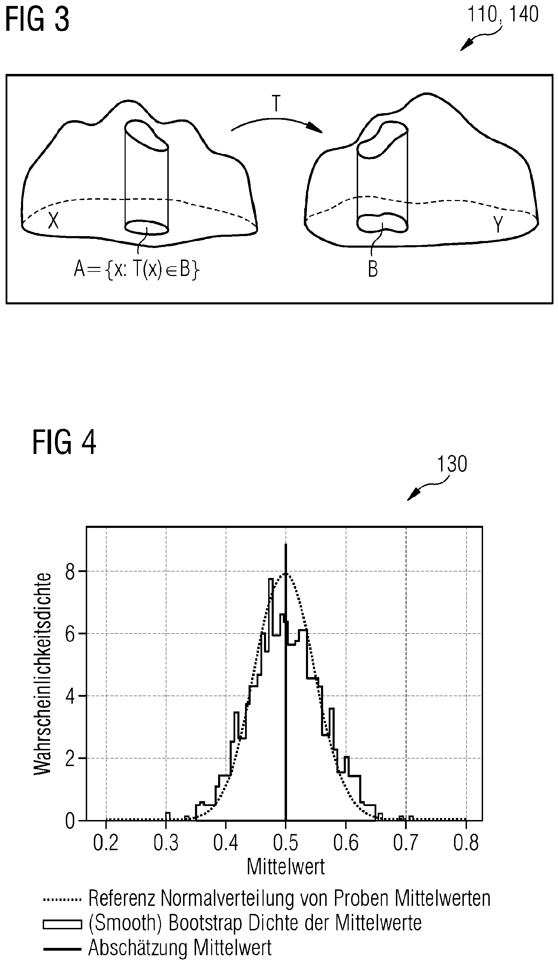

**Figur 3** illustriert das prinzipielle Vorgehen der Optimal Transport Theory (OTT). Eine Quellverteilung (linke Seite) wird auf eine Zielverteilung (rechte Seite) übertragen, wobei derjenige Transport (T) die Lösung des Optimierungsproblems ist, welcher die insgesamt bei diesem Transport aufzuwendende Arbeit minimiert.

**Figur 4** zeigt ein Ermitteln eines Akzeptanzkriteriums gemäß einem exemplarischen Ausführungsbeispiel der Erfindung. Dies entspricht dem dritten Verfahrensschritt 130, wobei eine Wahrscheinlichkeitsdichteverteilung erhalten wird. Um einen Mittelwert (hier 0,5) herum ergibt sich durch den Bootstrapping Algorithmus eine Verteilungsdichte. Diese kann approximiert werden zu einer Kurve, welche die Wahrscheinlichkeitsdichteverteilung anzeigt.

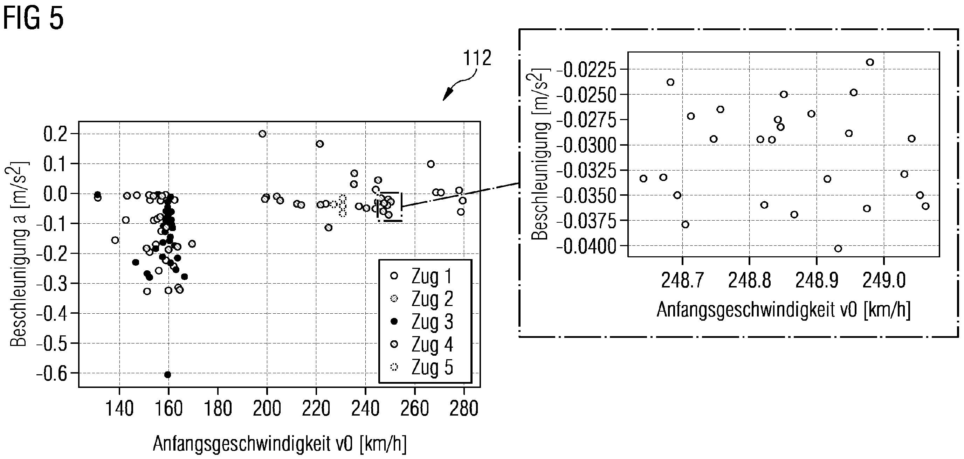

**Figur 5** zeigt einen Realdatensatz 112 gemäß einem exemplarischen Ausführungsbeispiel der Erfindung. Die realen Binärzeitreihen (nicht gezeigt) beziehen sich auf fünf unterschiedliche Zugtypen, die bei unterschiedlichen Geschwindigkeiten und unterschiedlichen Beschleunigungen an dem Achszähler vorbeifahren. Dabei wird exemplarisch ein Cluster an Binärzeitreihen des Zugtyps 4 extrahiert, deren Beschleunigungen a und Geschwindigkeiten v_0 einer so geringen Varianz unterliegen, dass die Zeitreihen als gleichartig angesehen werden können.

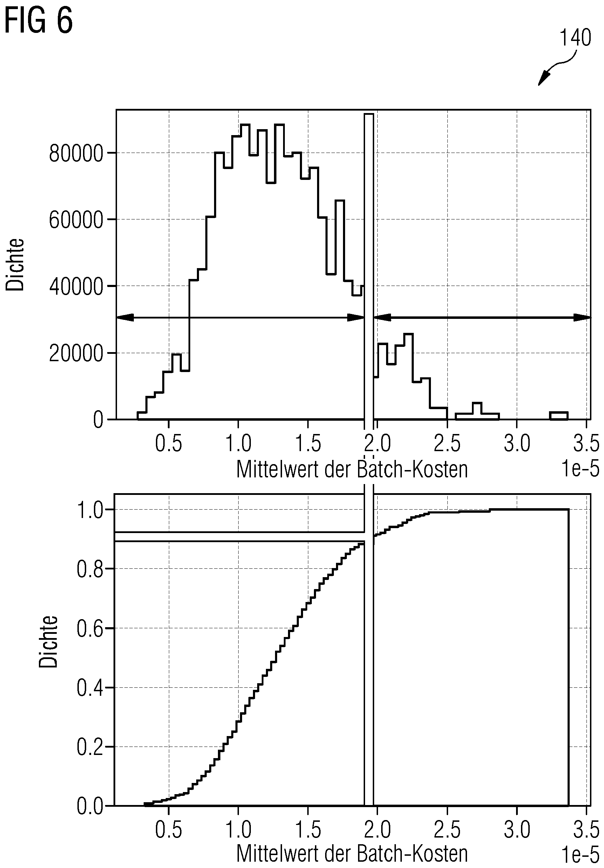

**Figur 6** zeigt ein Bewerten (dies entspricht dem letzten Schritt 140) von einem simulierten Datensatz anhand des Akzeptanzkriteriums gemäß einem exemplarischen Ausführungsbeispiel der Erfindung. Als Akzeptanzkriterium (C_{akzeptiert max.} = C_{A}) wurde der Wert 1.89 × 10⁻⁵ bestimmt, basierend auf dem Cluster (Plot rechts) aus Figur 5. Geringere Werte wurden als akzeptabel bewertet, während höhere Werte als inakzeptable bewertet wurden. Die akzeptablen Werte sind nun als realistische simulierte Binärzeitreihen anzusehen und können weiteren Anwendungen (im Schienenfahrzeugbereich) zugeführt werden, z.B. als Trainingsdaten für eine KI.

In einem spezifischen Ausführungsbeispiel wurden für unterschiedliche simulierte Geschwindigkeiten/Beschleunigungen verschiedene C/C_{A} bestimmt (C sind die gemessenen Kosten, so dass C/C_{A} die Akzeptanzgrenze ist).

Zusammengefasst lässt sich hier sagen, dass je näher die Randbedingungen (Geschwindigkeit, Beschleunigung) der simulierten Zeitreihe sich den Bedingungen der Realdaten (hier Cluster in Figur 5) nähern, desto mehr streben die Kosten in Richtung der Akzeptanzgrenze (C/C_{A} = 1), bis diese dann akzeptabel sind (C/C_{A} < 1).

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffes sind Personen mit männlicher, weiblicher oder anderer Geschlechtsidentität mit umfasst.

## Patentansprüche

1. Ein computer-implementiertes Verfahren zum Bewerten eines simulierten Datensatzes, das Verfahren aufweisend:
Simulieren (110) eines Datensatzes (111), welcher eine simulierte Binärzeitreihe, insbesondere eines Achszählers, aufweist;
Bereitstellen (120) zumindest eines korrespondierenden gemessenen Datensatzes (112), welcher mindestens eine gemessene Binärzeitreihe aufweist, und eines Bezugsdatensatzes, welcher mit dem gemessenen Datensatz (112) assoziiert ist;
Bestimmen (130) eines Akzeptanzkriteriums (C_{A}) bezüglich des simulierten Datensatzes (111) basierend auf dem Bezugsdatensatz;
Bestimmen einer Abweichung (140) zwischen dem simulierten Datensatz (111) und dem gemessenen Datensatz (112) und/oder einem mit dem gemessenen Datensatz assoziierten Datensatz; und
Feststellen, ob die Abweichung das Akzeptanzkriterium (C_{A}) erfüllt.

2. Das Verfahren gemäß Anspruch 1, wobei das Bestimmen der Abweichung (140) aufweist:
Transformieren des simulierten Datensatzes (111) zu dem gemessenen Datensatz (112) oder umgekehrt.

3. Das Verfahren gemäß Anspruch 2,
wobei das Transformieren das Verwenden einer Wahrscheinlichkeitsdichtefunktion aufweist.

4. Das Verfahren gemäß Anspruch 3,
wobei das Transformieren einen Optimal Transport Theory, OTT, Algorithmus, insbesondere Earth Mover's Distance, EMD, Algorithmus, aufweist.

5. Das Verfahren gemäß Anspruch 2,
wobei das Transformieren einen Dynamic Time Warping, DTW, Algorithmus, insbesondere einen penalized-DTW Algorithmus, aufweist.

6. Das Verfahren gemäß einem beliebigen der vorhergehenden Ansprüche, wobei das Bereitstellen (120) des Bezugsdatensatzes (T) aufweist:
Bereitstellen von zwei oder mehr gemessenen Datensätzen (112) .

7. Das Verfahren gemäß einem beliebigen der vorhergehenden Ansprüche, wobei das Bereitstellen (120) des Bezugsdatensatzes aufweist:
künstliches Erweitern des gemessenen Datensatzes (112), insbesondere mittels Beaufschlagens des gemessenen Datensatzes mit einer, insbesondere zufälligen, Störung, insbesondere einem Rauschen und/oder einem Messfehler.

8. Das Verfahren gemäß einem beliebigen der vorhergehenden Ansprüche, wobei das Bereitstellen (130) des Akzeptanzkriteriums (C_{A}) aufweist:
Bereitstellen von, insbesondere zufälligen, Teilmengen des Bezugsdatensatzes; und
Bestimmen eines Konfidenzintervalls basierend auf den Teilmengen.

9. Das Verfahren gemäß Anspruch 8,
wobei das Bestimmen des Konfidenzintervalls (130) das Verwenden eines statistischen Algorithmus, insbesondere eines Bootstrapping Algorithmus, aufweist.

10. Das Verfahren gemäß einem beliebigen der vorhergehenden Ansprüche,
wobei die Binärzeitreihe (111, 112) eine Mehrzahl von Peaks aufweist und wobei bei Bestimmen der Abweichung und/oder des Akzeptanzkriteriums (C_{A}) zumindest einer der folgenden Parameter berücksichtigt wird: Peak-Zeitverteilung, Peak-Breite, Peak-Steigung.

11. Das Verfahren gemäß einem beliebigen der vorhergehenden Ansprüche, wobei das Verfahren im Zusammenhang mit Schienen-gebundenen Fahrzeugen eingesetzt wird.

12. Ein Verfahren zum Bereitstellen von Trainingsdaten, das Verfahren aufweisend:
Bewerten eines simulierten Datensatzes (111) gemäß einem beliebigen der Ansprüche 1 bis 11; und
Verwenden der simulierten Daten (111), welche das Akzeptanzkriterium (C_{A}) erfüllen, als Trainingsdaten.

13. Das Verfahren gemäß Anspruch 12, ferner aufweisend:
Bereitstellen der Trainingsdaten an einen künstliche Intelligenz, KI, Algorithmus,
insbesondere wobei das Erfüllen des Akzeptanzkriteriums (C_{A}) eine notwendige Zulassungsvoraussetzung für den Einsatz der simulierten Daten (111) bezüglich des KI Algorithmus ist.

14. Eine Vorrichtung zur Datenverarbeitung, welche zumindest einen Prozessor aufweist, und welche eingerichtet ist das Verfahren gemäß einem beliebigen der Ansprüche 1 bis 13 auszuführen.

15. Ein Computerprogrammprodukt, welches Befehle aufweist, die bei der Ausführung des Programms durch einen Computer diesen veranlassen, das Verfahren gemäß einem beliebigen der Ansprüche 1 bis 13 auszuführen.
